# DEMANDE DE BREVET EUROPEEN

(11) **EP 2 000 985 A1**
(43) Date de publication de la demande: **10.12.2008**
(21) Numéro de dépôt: 08156918.8
(22) Date de dépôt: 26.05.2008
(51) Int. Cl.: G07B 17/00

(54) **Dispositif de determination automatique du format d'un article de courrier**

(30) Priorité: 28.05.2007 FR 0755286
(71) Demandeur: NEOPOST TECHNOLOGIES, 92220 Bagneux (FR)
(72) Inventeur: Fajour, Michel, 92320 CHATILLON (FRANCE) (FR)
(74) Mandataire: David, Alain

(57) **Abrégé**

Dispositif de détermination de la catégorie de courrier d'un article de courrier, comportant un pupitre (10) destiné à recevoir cet article de courrier, au moins un gabarit (14A, 14B) fixé sur ledit pupitre et comportant une fente de longueur et hauteur prédéterminées propres à définir une largeur et une épaisseur maximales déterminées pour l'article de courrier, des moyens (16A-16J) pour estimer automatiquement une longueur de l'article de courrier selon sa position sur le pupitre et par rapport au gabarit, et des moyens (18) pour, à partir de cette seule estimation de la longueur de l'article de courrier, délivrer à une machine d'affranchissement une information sur la catégorie de courrier à laquelle appartient cet article de courrier.

## Description

### Domaine de la technique

La présente invention se rapporte au domaine du traitement de courrier. Elle vise en particulier un dispositif pour la détermination automatique d'une catégorie de courrier à laquelle appartient un article de courrier délivré à un système d'affranchissement.

### Art antérieur

Aujourd'hui, la tarification d'articles de courrier repose non plus seulement sur des critères de poids et de service mais aussi sur la dimension (épaisseur, longueur et largeur) des articles de courrier expédiés. Il s'agit soit de vérifier que les dimensions de l'enveloppe ou du colis sont supérieures à des seuils (seuils « letter », « large letter » et « packet » de la réglementation britannique), soit de vérifier que le rapport entre la longueur et la largeur de cette enveloppe ou de ce colis est compris entre deux limites (exemples : 1,3 < R < 2,5 pour les Etats Unis, R < √2 pour l'Allemagne).

Pour attribuer de façon automatique le tarif adapté à chaque article de courrier dans un lot non homogène, on dispose, en amont du module d'affranchissement d'une machine de traitement de courrier, en général au niveau de son module d'alimentation appelé aussi alimenteur, un dispositif qui mesure le poids et les dimensions de chaque enveloppe, et transmet ces informations à un calculateur de tarif. La mesure de poids peut aussi être réalisée à part au moyen d'un module de pesée indépendant disposé dans le chemin de transport des enveloppes, par exemple entre l'alimenteur et le module d'affranchissement.

Un exemple d'un tel dispositif est illustré dans le brevet US7,098,410 déposée au nom de la demanderesse. Ce dispositif donne pleinement satisfaction. Toutefois, il s'avère complexe et onéreux et donc en pratique peu adapté aux machines à affranchir d'entrée de gamme.

### Objet et définition de l'invention

La présente invention vise ainsi à proposer un dispositif destiné à permettre la mesure du format (longueur, largeur, épaisseur) d'un article de courrier pour définir la catégorie de courrier à laquelle il appartient à des fins d'affranchissement, sans qu'il soit nécessaire de recourir à des systèmes complexes ou coûteux pour effectuer cette mesure. Un but de l'invention est aussi de proposer un dispositif universel qui puisse être mis en oeuvre dans n'importe quel pays, c'est-à-dire qu'elle que soit la réglementation postale en vigueur dans ces pays.

Ces buts sont atteints conformément à l'invention grâce à un dispositif de détermination de la catégorie de courrier d'un article de courrier, comportant un pupitre destiné à recevoir ledit article de courrier,
**caractérisé en ce qu**'il comprend en outre :
■ au moins un gabarit fixé sur ledit pupitre et comportant une fente de longueur et hauteur prédéterminées propres à définir une largeur et une épaisseur maximales déterminées pour ledit article de courrier,
■ des moyens pour estimer automatiquement une longueur dudit article de courrier selon sa position sur ledit pupitre et par rapport audit au moins un gabarit, et
■ des moyens pour, à partir seulement de ladite estimation de la longueur dudit article de courrier, délivrer à une machine d'affranchissement une information sur la catégorie de courrier à laquelle appartient ledit article de courrier.

Ainsi, la présence d'un gabarit sur un simple pupitre permet de réduire la détermination du format d'un article de courrier à une simple estimation de sa longueur. Il est ainsi possible sans connaître ce format d'en déduire la catégorie de courrier à laquelle appartient cet article de courrier pour ensuite, dès lors que son poids sera connu, calculer son montant d'affranchissement.

De préférence, ledit pupitre ayant des rebords longitudinal et latéral contre lesquels ledit article de courrier est mis en référence et ledit au moins un gabarit étant fixé parallèlement audit rebord latéral, lesdits moyens d'estimation de ladite longueur comportent une unique série de détecteurs de présence disposés chacun sur ledit pupitre à des positions respectives prédéterminées par rapport audit rebord latéral et audit au moins un gabarit et délivrant chacun un signal d'état à destination d'une unité de traitement élaborant ladite information de catégorie de courrier.

Avantageusement, il comporte des premier et second gabarits formant les deux branches d'un profilé en U disposé parallèlement audit rebord latéral et définissant chacun pour ledit article de courrier une largeur et une épaisseur maximales déterminées différentes.

De préférence, chacun des détecteurs de présence est choisi parmi l'un des capteurs suivants : optiques, mécaniques, ultrasonores.

Avantageusement, ladite série unique de détecteurs de présence comporte un premier détecteur de présence disposé entre ledit rebord latéral de mise en référence et ledit premier gabarit et un second détecteur de présence disposé entre lesdits premiers et seconds gabarits, les autres détecteurs de présence étant disposés dans des positions s'éloignant l'une après l'autre dudit second gabarit. Ladite série unique de détecteurs de présence peut être formée par une barrette de diodes électroluminescentes.

De préférence, ladite unité de traitement est reliée à ladite machine d'affranchissement par un connecteur du type « on branche et ça marche ».

La présente invention se rapporte également à toute machine d'affranchissement comprenant un dispositif de détermination de la catégorie de courrier d'un article de courrier tel que précité.

### Brève description des dessins

D'autres caractéristiques et avantages de l'invention ressortiront de la description suivante de modes de réalisation particuliers, donnés à titre d'exemples, en référence aux dessins annexés, sur lesquels :
- les figures 1 et 2 sont des vues en perspective pour différents formats d'articles de courrier d'un dispositif de détermination de la catégorie de courrier d'un article de courrier selon l'invention,
- la figure 3 est une vue arrière du dispositif de la figure 1, et
- la figure 4 est un arbre de décision montrant les diverses étapes permettant la détermination de la catégorie de courrier à laquelle appartient un article de courrier traité par le dispositif des figures 1 et 2.

### Description détaillée de modes de réalisation préférentiels

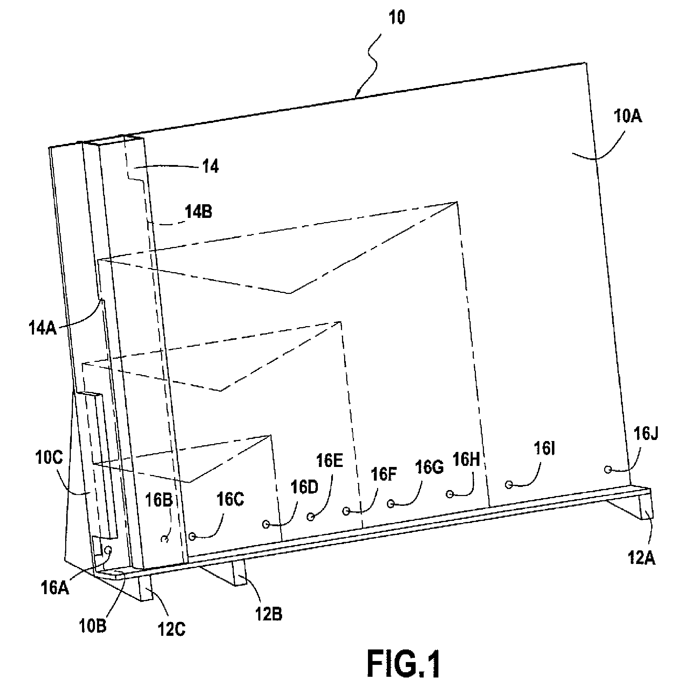

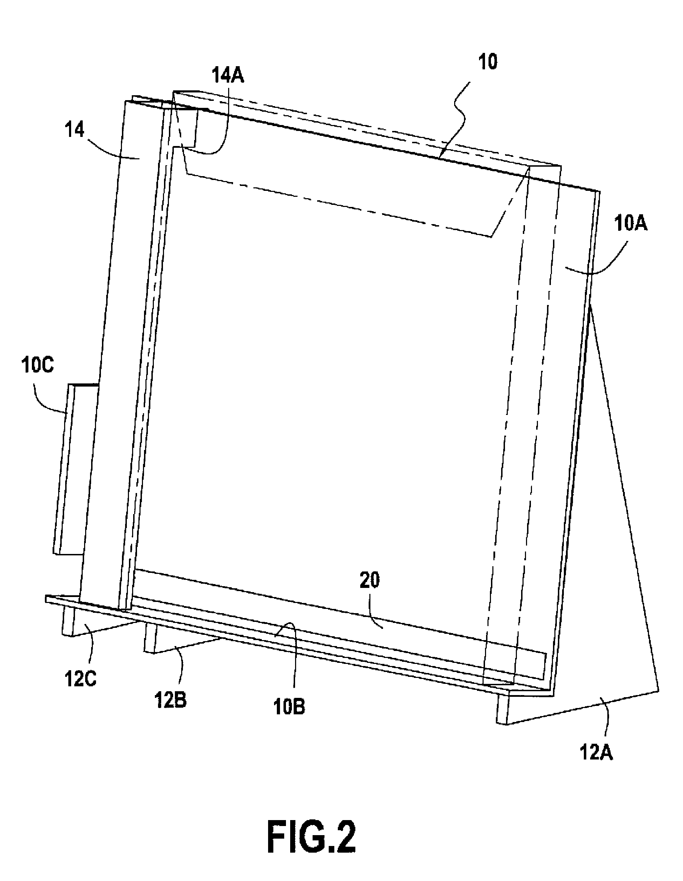

Les figures 1 et 2 sont des vues en perspective d'un dispositif selon l'invention permettant la détermination de la catégorie de courrier à laquelle appartient un article de courrier quelconque. Par article de courrier, il convient d'entendre une enveloppe comme un colis.

Ce dispositif se présente dans l'exemple illustré sous la forme d'un pupitre 10 reposant sur un ou plusieurs pieds 12A, 12B, 12C. Il est constitué d'un plan incliné 10A destiné à recevoir et supporter l'article de courrier et de butées de mise en référence formées par un rebord ou rabat longitudinal 10B à la base du pupitre et, sur un de ses deux cotés, par un rebord ou rabat latéral 10C, ces deux butées ayant pour fonction d'assurer un taquage de l'article de courrier en bas et à gauche du pupitre. Dans la suite de la description, les références aux adjectifs « droite » et « gauche » devront être comprises en considérant le pupitre faisant face à l'observateur.

Ce pupitre comporte un profilé en U 14 fixé sur le plan incliné parallèlement et à une distance prédéterminée du rabat latéral 10C et dont chacune des deux branches du U constitue un gabarit comportant une fente de longueur et hauteur prédéterminées propres à définir une largeur et une épaisseur maximales déterminées pour l'article de courrier. Dans l'exemple illustré, correspondant à la réglementation de la poste britannique (Royal Mail) dont les différentes catégories de courrier sont données ci-dessous, le gabarit de gauche comporte une première fente 14A de 5mm x 165mm et le gabarit de droite une seconde fente 14B de 25mm x 250mm permettant de définir trois fourchettes de largeur pour l'article de courrier (< 165mm, compris en 165mm et 250mm, > 250mm) et deux seuils d'épaisseur (5 et 25 mm).

**Tableau : Définitions des catégories de courrier de la « Royal Mail »**

| Catégories de courrier | Epaisseur | Taille = Longueur x Largeur | Poids |
|---|---|---|---|
| « letter » | < 5mm | < 240mm x 165mm | < 100 g |
| « large letter » | < 25mm | < 353mm x 250mm | < 750 g |
| « packet » | > 25mm | > 353mm x 250mm | > 750g |

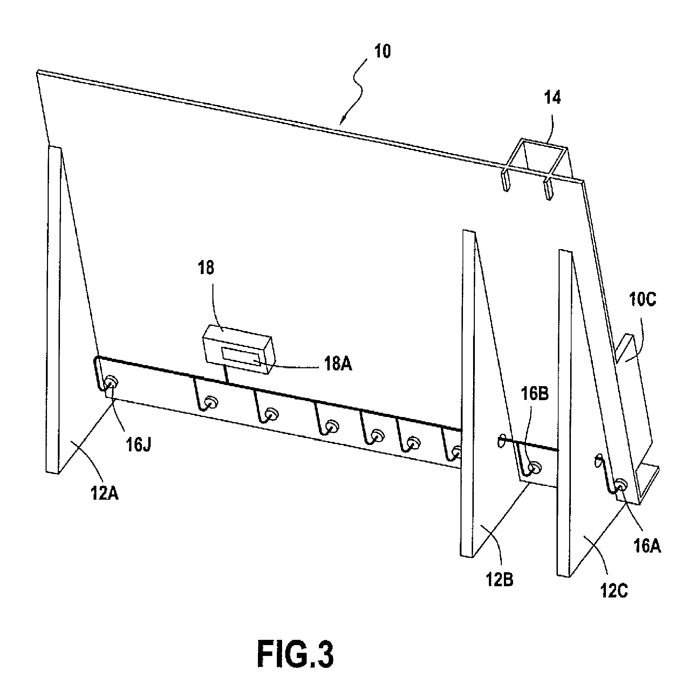

Le pupitre comporte en outre une unique série de détecteurs de présence 16A-16J reliés chacun à une unité de traitement 18 (illustrée sur la vue arrière de la figure 3) elle même en liaison via un connecteur 18A avec la machine d'affranchissement (non représentée) dont le pupitre constitue avantageusement un périphérique du type « on branche et ça marche », les positions prédéterminées respectives de ces détecteurs de présence étant adaptées pour, en détectant la présence et la position d'un article de courrier sur ce pupitre, que chacun de ces détecteurs délivre un signal d'état permettant une estimation de la longueur de l'article de courrier selon la position de cet article par rapport au rebord latéral et à l'un ou l'autre de ces gabarits. Ces détecteurs de présence peuvent être de tout type permettant par la délivrance de signaux d'état à deux états (tout ou rien, haut et bas) une détection de la présence de l'article de courrier sur le pupitre, comme des capteurs optiques, mécaniques, ultrasonores, etc..

Ainsi, dans l'exemple illustré qui ne saurait être limitatif, le capteur le plus à gauche, le premier capteur 16A, permet de détecter un article de courrier posé sur le pupitre et traversant les deux gabarits, le deuxième capteur 16B un article de courrier traversant seulement le gabarit de droite et venant en butée sur le gabarit de gauche à l'intérieur du profilé 14 et le troisième capteur 16C un article de courrier mis en butée sur le gabarit de droite.

L'estimation de la longueur de l'article de courrier est fournie en combinant ces informations d'état avec celles délivrées, dans l'exemple illustré, par les huitième au dixième capteurs, le huitième capteur 16H étant positionné à une distance de 240 mm du rabat latéral et le neuvième capteur 161 à une distance de 353 mm de ce rabat latéral de sorte à permettre la vérification de la longueur des articles de courrier de hauteur < 165mm et d'épaisseur < 5mm. De même, le dixième capteur 16J est positionné également à une distance de 353 mm mais cette fois du gabarit de gauche de façon à permettre la vérification de la longueur des articles de courrier de hauteur comprise entre 165mm et 250 mm et d'épaisseur < 25mm. Les quatrième 16D, cinquième 16E, sixième 16F et septième 16G détecteurs de présence ne sont pas utilisés dans l'exemple illustré mais trouvent bien entendu application dans le cadre d'autres réglementations postales mettant en oeuvre des formats différents, ce qui confère un caractère universel au dispositif de l'invention.

Ainsi, avec l'invention, la détermination de la catégorie de courrier est simplifiée et réduite à une seule estimation de la longueur de l'article de courrier fournie par de simples signaux d'état délivrés par une unique série de détecteurs, les deux autres paramètres du format (largeur et épaisseur) résultant de la position de l'article de courrier par rapport aux deux gabarits n'étant plus en soi nécessaires à cette détermination.

On notera que pour accentuer encore ce caractère universel et pour augmenter la précision dans l'estimation de longueur, les détecteurs de présence individuels peuvent être remplacés par une barrette 20 de diodes électroluminescentes, comme illustré sur la figure 2.

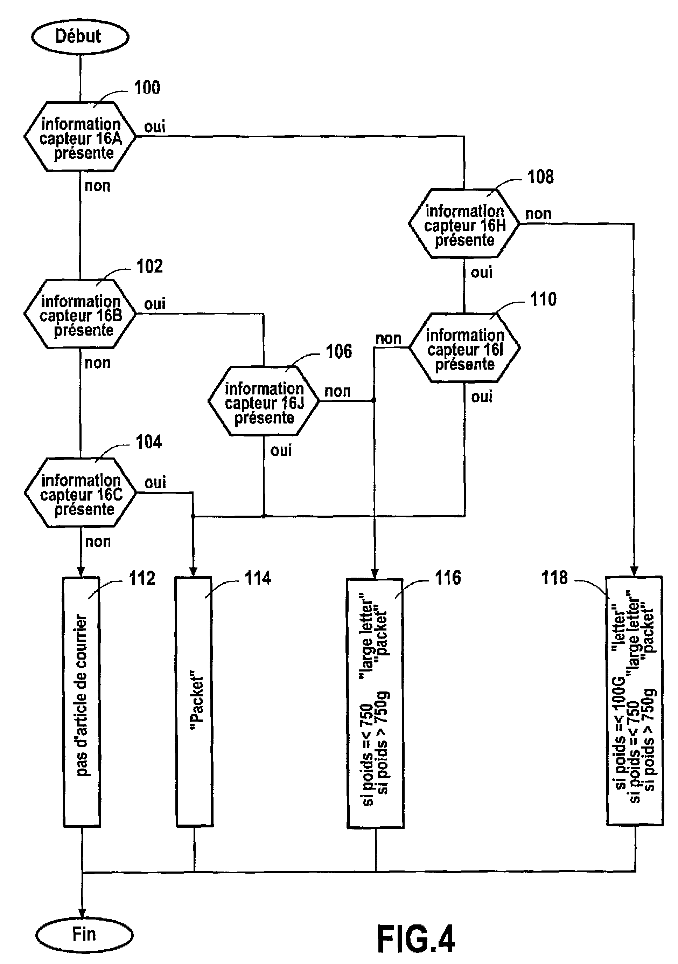

Le dispositif selon l'invention permet une détermination automatique de la catégorie de courrier à laquelle appartient l'article de courrier une fois celui-ci posé et convenablement taqué sur le pupitre par l'opérateur, une prise en compte ultérieure du poids de l'article de courrier par une balance ou une plateforme de pesée de la machine d'affranchissement permettant ensuite le calcul du tarif postal. La détermination de la catégorie de courrier résulte ainsi du seul état respectif des différents détecteurs de présence, une fois l'article de courrier placé sur le pupitre, comme il va être explicité maintenant en regard de l'arbre de décision de la figure 4.

Tout d'abord, il convient de noter que si le capteur 16A ne délivre pas une information de présence article (réponse non au test 100) et si les capteurs 16B et 16C font de même (réponse non successivement aux tests 102 et 104), alors il ressort clairement qu'il n'y a pas d'article de courrier sur le pupitre et la machine d'affranchissement en est informée dans une seconde étape 112.

Par contre, si les capteurs 16A et 16B ne délivrent toujours pas une information de présence article (réponse non aux tests 100 et 102) mais que le capteur 16C détecte au contraire cette présence (réponse oui au test 104) cela signifie que l'article de courrier a soit une épaisseur supérieure à 25 mm soit une largeur supérieure à 250 mm et qu'il entre donc dans la catégorie « packet » auquel cas la machine d'affranchissement peut donc être informée de la présence de cet article de type « packet » sur le pupitre dans une étape 114. Si le capteur 16A ne délivre toujours pas une information de présence article (réponse non au test 100) mais que le capteur 16B détecte au contraire cette présence (réponse oui au test 102) de même que le capteur 16J (réponse oui au test 106) cela signifie que l'article de courrier à une longueur supérieure à 353 mm et qu'il entre donc encore dans la catégorie « packet » dont la machine d'affranchissement doit être informée en faisant retour à l'étape 114. Par contre, si le capteur 16J ne détecte pas la présence de l'article de courrier (réponse non au test 106), ce qui signifie que l'article de courrier a une longueur inférieure à 353 mm, alors il convient d'informer la machine d'affranchissement, dans une étape 116, de la présence d'un article de courrier qui peut appartenir à la catégorie « packet » ou à celle des « large letter » selon que respectivement le poids que déterminera cette machine sera ou non supérieur à 750g.

Si maintenant le capteur 16A délivre une information de présence article (réponse oui au test 100), que les capteurs 16H et 161 font de même (réponse oui successivement aux tests 108 et 110), alors cela signifie que l'article de courrier a une longueur supérieure à 353 mm et la machine d'affranchissement peut être informée de la présence d'un article de la catégorie « packet » sur le pupitre par retour à l'étape 114. Si les capteurs 16A et 16H délivrent cette information de présence (réponse oui successivement aux tests 100 et 108) mais que le capteur 16J ne fait pas de même (réponse non au test 110) alors, du fait d'une longueur d'article de courrier inférieure à 353 mm, il convient, par retour dans l'étape 116, d'informer la machine d'affranchissement de la présence d'un article de courrier qui peut appartenir à la catégorie « packet » ou à celle des « large letter » selon que respectivement le poids que déterminera cette machine sera ou non supérieur à 750g. Enfin, si le capteur 16A délivre toujours une information de présence article (réponse oui au test 100), mais que cette fois le capteur 16H ne fait pas de même (réponse non au test 108), signifiant ainsi la présence d'un article de courrier de moins de 250 mm de longueur, alors selon que le poids que déterminera la machine d'affranchissement pour cet article de courrier, inférieur à 100 g ou encore, s'il est supérieur, inférieur ou supérieur à 750g, alors il conviendra dans l'étape 118 de l'affecter dans la catégorie « letter », « large letter » ou « packet » respectivement.

Ainsi, avec l'invention, la catégorie de courrier est obtenue très simplement sans le recours à des systèmes complexes et coûteux. On notera que si le dispositif est présenté en position sensiblement verticale, il est clair qu'il peut être mis en oeuvre dans une position horizontale et alors constituer le plateau d'un alimenteur en articles de courrier d'une machine d'affranchissement. En outre, l'invention permet une adaptation simple à l'ensemble des réglementations postales en vigueur en prévoyant à la fois différents gabarits et différents emplacements pour les détecteurs de présence.

## Revendications

1. Dispositif de détermination de la catégorie de courrier d'un article de courrier, comportant un pupitre (10) destiné à recevoir ledit article de courrier, **caractérisé en ce qu'**il comprend en outre :
. au moins un gabarit (14A, 14B) fixé sur ledit pupitre et comportant une fente de longueur et hauteur prédéterminées propres à définir une largeur et une épaisseur maximales déterminées pour ledit article de courrier,
. des moyens (16A-16J) pour estimer automatiquement une longueur dudit article de courrier selon sa position sur ledit pupitre et par rapport audit au moins un gabarit, et
. des moyens (18) pour, à partir de cette seule estimation de la longueur dudit article de courrier, délivrer à une machine d'affranchissement une information sur la catégorie de courrier à laquelle appartient ledit article de courrier.

2. Dispositif selon la revendication 1, **caractérisé en ce que** ledit pupitre ayant des rebords longitudinal (10B) et latéral (10C) contre lesquels ledit article de courrier est mis en référence et ledit au moins un gabarit étant fixé parallèlement audit rebord latéral, lesdits moyens d'estimation de ladite longueur comportent une unique série de détecteurs de présence (16A-16J) disposés chacun sur ledit pupitre à des positions respectives prédéterminées par rapport audit rebord latéral et audit au moins un gabarit et délivrant chacun un signal d'état à destination d'une unité de traitement (18) élaborant ladite information de catégorie de courrier.

3. Dispositif selon la revendication 2, **caractérisé en ce que** chacun desdits détecteurs de présence est choisi parmi l'un des capteurs suivants : optiques, mécaniques, ultrasonores.

4. Dispositif selon la revendication 2, **caractérisé en ce qu'**il comporte des premier (14A) et second (14B) gabarits formant les deux branches d'un profilé en U (14) disposé parallèlement audit rebord latéral et définissant chacun une largeur et une épaisseur maximales déterminées différentes pour ledit article de courrier.

5. dispositif selon la revendication 4, **caractérisé en ce que** ladite série unique de détecteurs de présence comporte un premier détecteur de présence (16A) disposé entre ledit rebord latéral de mise en référence et ledit premier gabarit et un second détecteur de présence (16B) disposé entre lesdits premiers et seconds gabarits, les autres détecteurs de présence (16C-16J) étant disposés dans des positions s'éloignant l'une après l'autre dudit second gabarit.

6. Dispositif selon la revendication 3, **caractérisé en ce que** ladite série unique de détecteurs de présence est formée par une barrette de diodes électroluminescentes (20).

7. Dispositif selon l'une quelconque des revendications 1 à 6, **caractérisé en ce que** ladite unité de traitement est reliée à ladite machine d'affranchissement par un connecteur (18A) du type « on branche et ça marche ».

8. Machine d'affranchissement comprenant un dispositif de détermination de catégorie de courrier selon l'une quelconque des revendications 1 à 7.
